**Europäisches Patentamt**

**European Patent Office**

**Office européen des brevets**

(19)

(11) Veröffentlichungsnummer : **0 161 652**
**B1**

(12) **EUROPÄISCHE PATENTSCHRIFT**

(45) Veröffentlichungstag der Patentschrift :
**15.03.89**

(51) Int. Cl.⁴ : **F 16 B 45/00**, F 16 B 35/06

(21) Anmeldenummer : **85105823.0**

(22) Anmeldetag : **11.05.85**

(54) **Ringschraube.**

(30) Priorität : **15.05.84 DE 8414736 U**

(43) Veröffentlichungstag der Anmeldung :
**21.11.85 Patentblatt 85/47**

(45) Bekanntmachung des Hinweises auf die Patenterteilung : **15.03.89 Patentblatt 89/11**

(84) Benannte Vertragsstaaten :
**AT CH DE FR IT LI NL**

(56) Entgegenhaltungen :
**EP--A-- 0 099 577**
**DE--A-- 1 500 642**
**US--A-- 4 174 087**

(73) Patentinhaber : **Pfeifer Seil- und Hebetechnik GmbH &**
**Co.**
**Mammostrasse 1**
**D-8940 Memmingen (DE)**

(72) Erfinder : **Hoyer, Peter, Ing. grad.**
**Eichenstrasse 4**
**D-8940 Memmingen (DE)**

(74) Vertreter : **Pfister, Helmut, Dipl.-Ing.**
**Buxacher Strasse 9**
**D-8940 Memmingen/Bayern (DE)**

**Beschreibung**

Die Erfindung betrifft eine Ringschraube zum Einleiten großer Kräfte in ein Betonteil mit einem Gewindebolzen, der in ein im Betonteil verankertes Innengewinde eingeschraubt ist, mit einem Ringelement zur Einleitung von Zugkräften, das gegenüber dem Gewindebolzen verdrehbar ist und das mit eine ringförmigen Platte den Gewindebolzen umgibt, mit einem äußeren Halteglied und einem inneren Bund am Gewindebolzen, zwischen denen der Ringteil verdrehbar angeordnet ist und mit einer Abstützfläche für das Ringelement, das den Gewindebolzen umgibt.

In der DE-A 1 500 642 ist eine Ringschraube der vorstehend angegebenen Gattung beschrieben. Diese Ringschraube dient zum Einschrauben in ein Betonteil, so daß an dem Betonteil eine Last verankert werden kann. Dabei geht es darum, eine möglichst effektive und sichere Lastaufnahme zu erreichen, um ein Versagen der Verbindung auszuschließen. Gleichartige Probleme treten auf, wenn es darum geht, Betonfertigteile zu transportieren und wenn ein Hebezeug mit einer in ein Betonfertigteil eingeschraubten Ringschraube zu verbinden ist. Um auszuschließen, daß auf die Ringschraube, und zwar insbesondere auf den Gewindebolzen bei Schrägzügen erhebliche zusätzliche Belastungen einwirken, ist es bekannt, eine ringförmige Abstützfläche vorzusehen, die den Gewindebolzen umgibt, so daß bei Schrägzügen kein Biegemoment auf den Gewindebolzen einwirken kann.

Das Ringelement stellt sich bei der bekannten Ringschraube bei Schrägzügen auf die Richtung der eingeleiteten Kraft ein. Zu diesem Zweck ist die Verdrehbarkeit des Ringteils um den Gewindebolzen vorgesehen, aber auch eine Verschwenkbarkeit zwischen dem Ringelement, an dem beispielsweise ein Seilzug angreift und ringförmigen Platte, die um den Gewindebolzen verdrehbar ist. Die Anordnung eines Gelenkes zwischen ringförmigen Platte und dem Ringelement, das parallel zur Außenfläche des Betonteils verläuft, vergrößert den Abstand des Lastangriffspunktes von der Stützfläche. Die Verwendung von Gelenkbolzen vergrößert zudem den Aufwand und begrenzt die kleinste, die Kräfte übertragende Querschnittsfläche.

Der Erfindung liegt die Aufgabe zugrunde, eine Ringschraube der eingangs angegebenen Gattung dahingehend weiter zu entwickeln, daß bei gleichen Außenabmessungen größere Kräfte übertragbar sind, ohne daß der Herstellungsaufwand vergrößert wird.

Zur Lösung dieser Aufgabe wird ausgegangen von der Ringschraube der eingangs angegebenen Gattung. Die Erfindung schlägt vor, daß die den Gewindebolzen umgebende ringförmige Platte einstückig mit dem Ringelement ausgebildet ist.

Bei der Erfindung ist somit nur eine Verdrehbarkeit des Ringelementes um den Gewindebolzen gegeben. Eine Neigbarkeit des Ringelementes um eine Achse rechtwinklig zur Achse des Gewindebolzens fehlt dagegen.

Überraschenderweise wurde gefunden, daß sich die erfindungsgemäße Ringschraube ausreichend auf Schrägzüge einstellt. Bei Belastung verdreht sich das Ringelement ohne weiteres so, daß der Seilzug, der am Ringelement angreift, in der Ebene liegt, die durch das Ringelement gebildet wird. Die Ringschraube wirkt dabei optimal mit den vorgesehenen Abstützflächen zusammen, so daß keine Biegemomente auftreten, die den Gewindebolzen belasten könnten. Auch besteht wie bei der bekannten Anordnung keine Gefahr, daß sich die Ringschraube im Innengewinde lockert.

Sollte es sich ergeben, daß die Last genau rechtwinklig zur Ebene des Ringelements angreift, wird sich das Ringelement gegebenenfalls nicht verdrehen. Aber auch dann bleiben die vorgesehenen Abstützflächen ausreichend wirksam, und die auftretenden Kräfte und Momente bleiben beherrschbar.

Bei einer Ausführungsform der Erfindung ist der innere Bund als Stützplatte ausgebildet, auf der sich die ringförmige Platte abstützt. Insbesondere hierbei ist es günstig, wenn der stützplattenartige Bund einstückig mit dem Gewindebolzen ausgebildet ist. Dies gibt eine gedrängte Bauweise, was die auftretenden Biegemomente reduziert.

Da bei der Erfindung das Ringelement gegenüber dem Gewindebolzen verdrehbar ist, ist klar, daß der Gewindebolzen nicht einfach mittels des Ringelementes eindrehbar ist. Die Eindrehbarkeit läßt sich beispielsweise dadurch erreichen, daß das Halteglied bzw. das äußere Ende des Gewindebolzens eine Schlüsselfläche aufweist. Es können aber auch Mitnehmer zwischen dem Halteglied und dem Ringelement bzw. der mit dem Ringelement verbundenen Stützplatte vorgesehen sein. Solche Mitnehmer können eine verschiedene Ausgestaltung aufweisen. Die Mitnahme kann durch eine Kupplung erfolgen, wobei das eine Kupplungselement am Gewindebolzen und das andere Kupplungselement am Zwischenglied angeordnet wird. Auf diese Weise läßt sich mittels des Zwischenglieds der Gewindebolzen verdrehen.

Die Erfindung schlägt weiter federnde Mitnehmer vor, die oberhalb eines vorbestimmten Drehmoments ausrasten. Mit dieser Bauweise kann einfach der Gewindebolzen mit dem Ringelement, beispielsweise mittels des Zwischenglieds, eingeschraubt werden. Hat er die richtige Lage in der Last erreicht, läßt sich das Ringelement verdrehen und in eine Lage bringen, die für die richtige Krafteinleitung benötigt wird.

Es ist aber auch ein betätigbarer Mitnehmer möglich, beispielsweise ein Stift, der so in das Halteglied oder in den Gewindebolzen eingesteckt wird, daß am Ringelement eine Einschraubbewegung möglich wird. Ähnliche Wirkungen lassen sich erreichen, wenn radial zur Schraubachse einschraubbare Mitnehmer vorgesehen werden, die bei ausreichender Einschraubtiefe das Ringelement völlig freigeben, bei teilweiser Einschraubung dagegen einen Anschlag für das Ringelement bilden, so daß das Einschrauben gelingt.

Insbesondere schlägt die Erfindung ein symmetrisches Ringelement vor, das parallel zur Außenfläche der Last wesentlich größere Abmessungen besitzt als senkrecht zu dieser Außenfläche. Ein Ringelement dieser Ausbildung wird sich bei einem Schrägzug selbst in die richtige Richtung einstellen, in der dann die Lastrichtung in der Ebene des Ringes des Ringelements verläuft.

In der Zeichnung sind drei Ausführungsbeispiele der Erfindung schematisch dargestellt.

Es zeigen :

Fig. 1 eine teilweise Schnittdarstellung,

Fig. 2 eine Seitenansicht eines ersten Ausführungsbeispiels der Erfindung,

Fig. 3 und Fig. 4 entsprechende Darstellungen, teilweise im Schnitt eines zweiten Ausführungsbeispiels der Erfindung und

Fig. 5 und Fig. 6 entsprechende Darstellungen eines weiteren Ausführungsbeispiels der Erfindung.

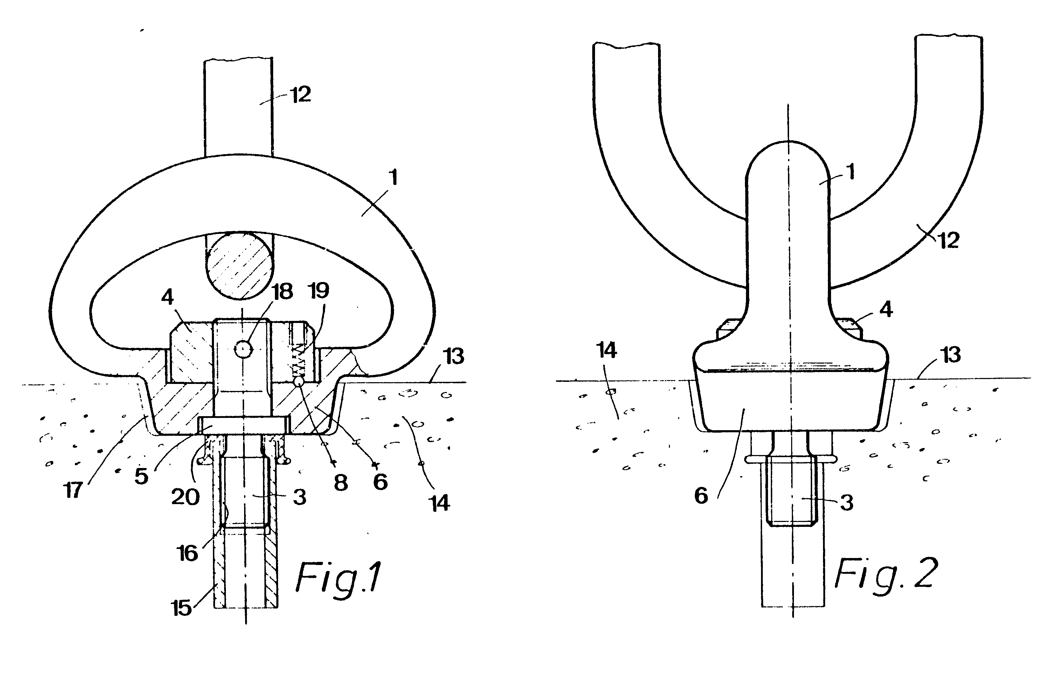

Im Ausführungsbeispiel der Fig. 1 besitzt das Ringelement 1 in Richtung der Außenfläche 13 der Last 14 wesentlich größere Abmessungen als senkrecht hierzu, so daß bei einem Zug am Zwischenglied 12 eine entsprechende Ausrichtung des Ringelements 1 eintritt. Das Zwischenglied 12 kann beispielsweise ein massiver Ring sein, der in einen Kranhaken einhängbar ist. Das Zwischenelement 12 kann aber auch eine Seilschlaufe, beispielsweise in Form einer 8 sein.

Der Gewindebolzen 3 ist in eine Hülse 15 mit Innengewinde 16 eingeschraubt, welche Hülse 15 in der Last 14 verankert ist. In der Außenfläche 13 der Last ist eine Vertiefung 17 vorgesehen, die in der Lage ist, die Stützplatte 6, die einstückig mit dem Ringelement verbunden ist, aufzunehmen. Der Gewindebolzen 3 besitzt einen Bund 5, der dem Ringelement 1 eine Anlage gibt. Das Ringelement 1 bzw. die Stützplatte 6 werden mittels des aufgeschraubten Haltegliedes 4 in der gewünschten Stellung gehalten, wobei das Halteglied durch eine Querbohrung 18 mit einem Splint od. dergl. in der gewünschten Distanz zum Bund 5 gehalten wird. Im Halteglied 4 ist eine Feder 19 gelagert, die eine Kugel 8 in eine Vertiefung auf der Außenfläche der Stützplatte drückt. Durch geeignete Vorspannung der Feder 19 läßt sich der Gewindebolzen 3 mittels des Ringelementes 1 einschrauben. Liegt der Bund 5 an der äußeren Abdeckung 20 der Hülse 15 an, kann das Ringelement 1 über die Kugel 8 hinweggedreht werden, und beispielsweise eine halbe Umdrehung weitergedreht werden, so daß ohne Einrasten der Kugel 8 eine Ausrichtung des Ringelements entsprechend der Last möglich wird. Die Stützplatte 6 liegt dabei am Boden der Vertiefung 17 auf, um die Kräfte sicher einzuleiten.

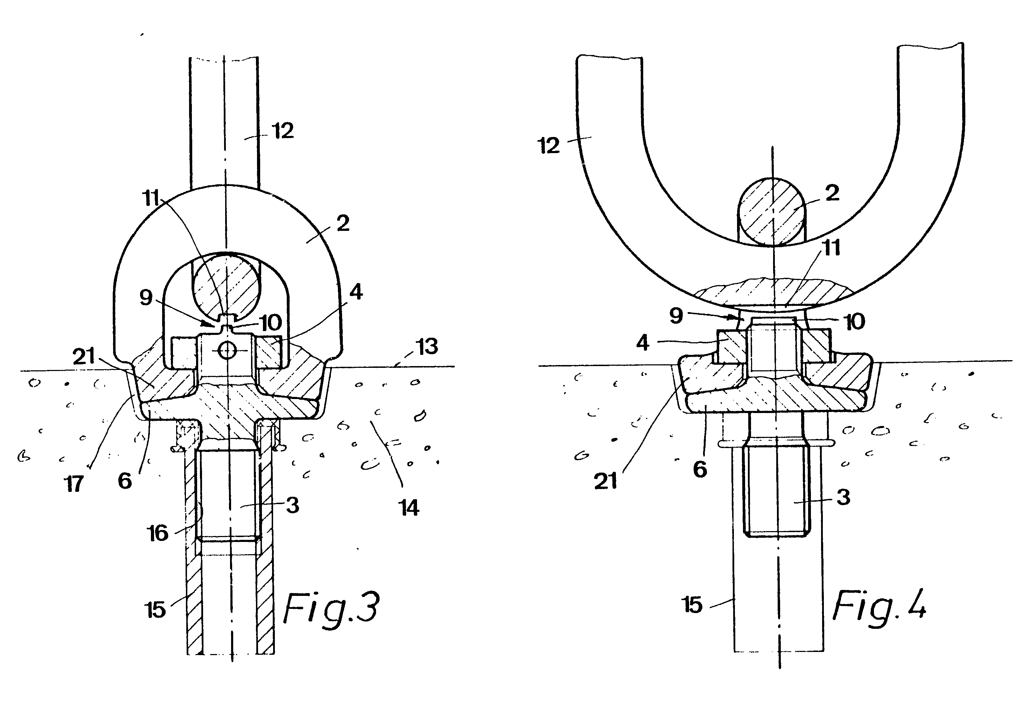

Beim Ausführungsbeispiel nach den Fig. 3 und 4 ist der Gewindebolzen 3 einstückig mit der Stützplatte 6 verbunden, während das Ringelement 2 mit seiner ringförmigen Platte 21 auf der Stützplatte 6 aufliegt und sich am Halteglied 4 abstützt.

Zwischen dem Zwischenglied 12 und dem Gewindebolzen ist als Mitnehmer eine Kupplung 9 vorgesehen. Hierfür ist am Zwischenglied 12 ein Schlitz angeordnet, der als Kupplungselement 11 dient und mit einer vorstehenden Leiste 10 am Bolzen 3 zusammenwirkt.

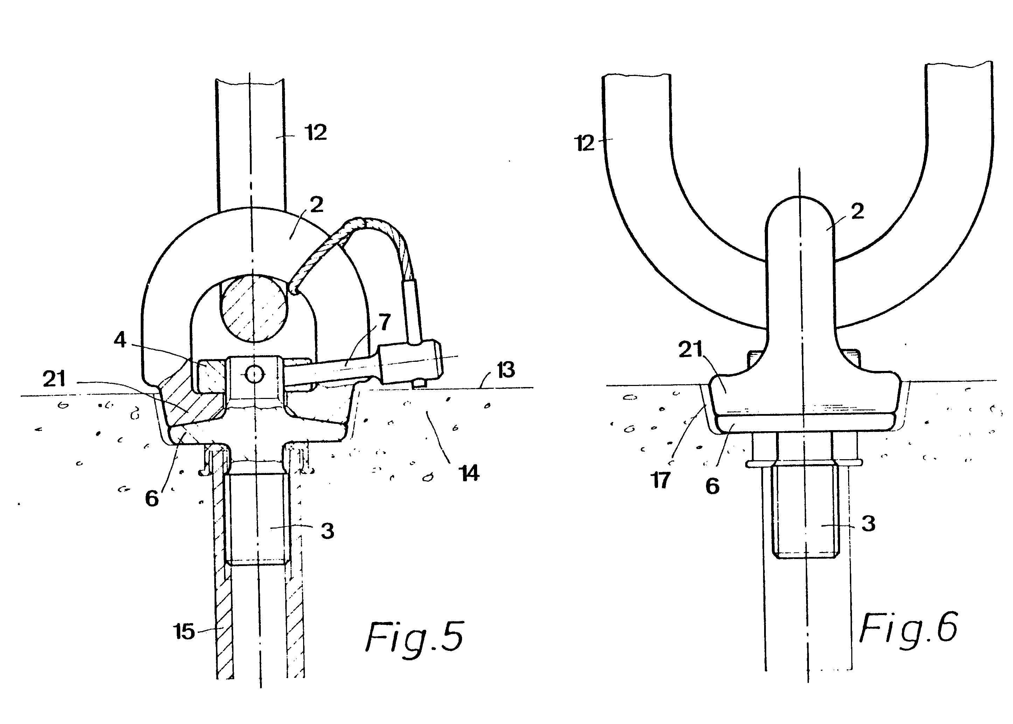

Beim Ausführungsbeispiel nach den Fig. 5 und 6 ist im Halteglied 4 eine Ausnehmung vorgesehen, in die der stiftartige Mitnehmer 7 eingesteckt werden kann. Dieser Stift 7 ist unverlierbar mit dem Ringelement 2 verbunden. Bei dieser Anordnung ist es möglich, mittels des Zwischengliedes 12 oder auch des Ringelementes 2 den Gewindebolzen einzuschrauben bzw. nach Gebrauch wieder herauszudrehen.

## Patentansprüche

1. Ringschraube zur Einleitung großer Kräfte in ein Betonteil (14), mit einem Gewindebolzen (3), der in ein im Betonteil verankertes Innengewinde eingeschraubt ist, mit einem Ringelement (1, 2) zur Einleitung von Zugkräften, das gegenüber dem Gewindebolzen (3) verdrehbar ist und das mit einer ringförmigen Platte (21) den Gewindebolzen (3) umgibt, mit einem äußeren Halteglied (4) und einem inneren Bund (5) am Gewindebolzen (3), zwischen denen die ringförmige Platte (21) verdrehbar angeordnet ist und mit einer Abstützfläche für das Ringelement (1, 2), das den Gewindebolzen (3) umgibt, dadurch gekennzeichnet, daß die den Gewindebolzen (3) umgebende ringförmige Platte (21) einstückig mit dem Ringelement (1, 2) ausgebildet ist.

2. Ringschraube nach Anspruch 1, dadurch gekennzeichnet, daß der innere Bund (5) als Stützplatte (6) ausgebildet ist, auf der sich die ringförmige Platte (21) abstützt.

3. Ringschraube nach Anspruch 1 oder 2, dadurch gekennzeichnet, daß der stützplattenartige Bund (5) einstückig mit dem Gewindebolzen (3) ausgebildet ist.

4. Ringschraube nach Anspruch 1 oder 2, dadurch gekennzeichnet, daß zwischen dem Gewindebolzen (3) einerseits und dem Ringelement (1, 2) andererseits lösbare Mitnehmer (7, 8, 9) angeordnet sind, mittels derer bei der Montage der Gewindebolzen (3) durch das Ringelement (1, 2) in das Innengewinde einschraubbar ist.

5. Ringschraube nach Anspruch 4, gekennzeichnet durch ein Kupplungselement (10) am Gewindebolzen (3), das mit einem Kupplungselement (11) an einem Zwischenglied (12) zusammenwirkt, das in das Ringelement (1, 2) eingehängt ist.

6. Ringschraube nach Anspruch 4 oder 5, gekennzeichnet durch einen federnden Mitnehmer (8), der oberhalb eines vorbestimmten Drehmoments ausrastet.

7. Ringschraube nach Anspruch 4 oder 5, gekennzeichnet durch einen betätigbaren, z. B.

einen einschraubbaren oder einen einsteckbaren Mitnehmer (7).

8. Ringschraube nach einem oder mehreren der vorhergehenden Ansprüche, gekennzeichnet durch ein symmetrisches Ringelement (1), das parallel zur Außenfläche des Betonteils bzw. der Last (14) wesentlich größere Abmessungen aufweist als senkrecht zur Außenfläche.

## Claims

1. A ring screw transmitting high forces into a concrete unit (14) with a threaded bolt (3) being screwed into an internal thread which is anchored in the concrete unit with a ring member (1, 2) to transmit the pulling forces being turnable against the threaded bolt (3) surrounding the threaded bolt (3) with an annular plate (21) with an external fixing member (4) and with an internal collar (5) at the threaded bolt (3) and whereas the annular plate (21) is arranged turnable between said two with a supporting surface for the ring member (1, 2) surrounding the threaded bolt (3) wherein that annular plate (21) surrounding the threaded bolt (3) forms one unit with the ring member (1, 2).

2. A ring screw as claimed in claim 1, wherein the internal collar (5) forming the base plate (6) supporting the annular plate (21).

3. A ring screw as claimed in claim 1 or 2 wherein the base plate shaped collar (5) forms one unit with the threaded bolt (3).

4. A ring screw as claimed in claim 1 or 2 wherein between threaded bolt (3) and the ring member (1, 2) detachable catches (7, 8, 9) are arranged by means of which the threaded bolt (3) can be screwed into the internal thread through the ring member (1, 2) during installation.

5. A ring screw as claimed in claim 4 wherein a coupling member (10) at the threaded bolt (3) acts together with a coupling member (11) at a connecting member (12) is hooked in into the ring member (1, 2).

6. A ring screw as claimed in claim 4 or 5 wherein a spring loaded catch (8) unlocks beyond a pre-determined torque.

7. A ring screw as claimed in claim 4 or 5 wherein the catch (7) can be operated, e.g. screwed-in or inserted.

8. A ring screw as claimed in one or several of the said claims wherein a symmetrical ring member (1) has a substantially larger dimension parallel to the outer surface than vertical to the outer surface of the concrete unit and/or the load (14).

## Revendications

1. Vis à anneau de levage pour l'introduction de forces importantes dans un élément en béton (14), avec un boulon fileté (3) vissé dans un filetage intérieur ancré dans l'élément en béton, un élément annulaire (1, 2) pour l'introduction de forces de traction orientable par rapport au boulon fileté (3) et entourant le boulon fileté (3) d'une plaque annulaire (21), un organe de retenue extérieur (4) et un collet intérieur (5) sur le boulon fileté (3) entre lesquels la plaque annulaire (21) est disposée de manière orientable, et une surface d'appui pour l'élément annulaire (1, 2) qui entoure le boulon fileté (3), caractérisée en ce que la plaque annulaire (21) qui entoure le boulon fileté (3) est conformée en une seule pièce avec l'élément annulaire (1, 2).

2. Vis à anneau de levage selon la revendication 1, caractérisée en ce que le collet intérieur (5) est conformé en plaque d'appui (6) qui prend appui sur la plaque annulaire (21).

3. Vis à anneau de levage selon l'une des revendications 1 ou 2, caractérisée en ce que le collet (5) en forme de plaque d'appui forme une seule pièce avec le boulon fileté (3).

4. Vis à anneau de levage selon l'une des revendications 1 ou 2, caractérisée en ce que, entre le boulon fileté (3) d'une part et l'élément annulaire (1, 2) d'autre part, sont disposés des tocs d'entraînement amovibles (7, 8, 9) au moyen desquels le boulon fileté (3) peut, lors du montage, être vissé par l'élément annulaire (1, 2) dans le filetage intérieur.

5. Vis à anneau de levage selon la revendication 4, caractérisée en ce qu'elle comprend un élément d'accouplement (10) sur le boulon fileté (3), qui coopère avec un élément d'accouplement (11) sur un organe intermédiaire (12) lequel est accroché dans l'élément annulaire (1, 2).

6. Vis à anneau de levage selon l'une des revendications 4 ou 5, caractérisée en ce qu'elle comprend un toc d'entraînement élastique (8) lequel se désenclenche au-delà d'un couple de rotation prédéterminé.

7. Vis à anneau de levage selon l'une des revendications 4 ou 5, caractérisée en ce qu'elle comprend un toc d'entraînement (7) manoeuvrable, par exemple vissable ou enfichable.

8. Vis à anneau de levage selon l'une ou plusieurs des revendications précédentes, caractérisée en ce qu'elle comprend un élément annulaire (1) symétrique dont les dimensions sont considérablement plus grandes dans le sens parallèle à la surface extérieure de l'élément en béton et respectivement de la charge (14) que perpendiculairement à ladite surface extérieure.

Fig.1

Fig.2

EP 0 161 652 B1

Fig.3

Fig.4

EP 0 161 652 B1

Fig.5

Fig.6

EP 0 161 652 B1